# FASCICULE DE BREVET EUROPEEN

(11) **EP 2 406 132 B1**
(45) Date de publication et mention de la délivrance du brevet: **14.09.2016**
(21) Numéro de dépôt: 10709894.9
(22) Date de dépôt: 19.02.2010
(51) Int. Cl.: B64D 15/12, H05B 3/26, B64D 33/02, H05B 3/34

(54) **DISPOSITIF DE DÉGIVRAGE, NOTAMMENT POUR NACELLE D'AÉRONEF**
ENTEISUNGSVORRICHTUNG, INSBESONDERE FÜR EINE FLUGZEUGGONDEL
DE-ICING DEVICE, IN PARTICULAR FOR AN AIRCRAFT NACELLE

(30) Priorité: 13.03.2009 FR 0901182
(43) Date de publication de la demande: 18.01.2012
(73) Titulaire: Aircelle, 76700 Gonfreville L'Orcher (FR)
(72) Inventeur: CARUEL, Pierre, F-76600 Le Havre (FR)
(74) Mandataire: Gaillarde, Frédéric F. Ch.
(86) Numéro de dépôt international: PCT/FR2010/050295
(87) Numéro de publication internationale: WO 2010/103212

(56) Documents cités:
- EP-A- 1 495 963
- EP-A- 1 953 085
- WO-A-2006/108125
- DE-A1- 4 221 454

## Description

La présente invention se rapporte à un dispositif de dégivrage pour lèvre d'entrée d'air de nacelle d'aéronef.

Une nacelle de turboréacteur d'aéronef présente généralement une structure comprenant une entrée d'air en amont du turboréacteur, une section médiane destinée à entourer une soufflante du turboréacteur, une section aval abritant des moyens d'inversion de poussée et destinée à entourer le générateur de gaz du turboréacteur, et est généralement terminée par une tuyère d'éjection dont la sortie est située en aval du turboréacteur.

L'entrée d'air d'une nacelle d'aéronef comprend, d'une part, une lèvre d'entrée adaptée pour permettre la captation optimale vers le turboréacteur de l'air nécessaire à l'alimentation de la soufflante et des compresseurs internes du turboréacteur, et d'autre part, une structure aval sur laquelle est rapportée la lèvre et destinée à canaliser convenablement l'air vers les aubes de la soufflante. L'ensemble est rattaché en amont d'un carter de la soufflante appartenant à la section amont de la nacelle.

La formation de givre sur les bords d'attaque d'une voilure d'aéronef ou sur les lèvres d'entrées d'air des turboréacteurs pose de nombreux problèmes, parmi lesquels : l'ajout de poids, le déséquilibre entre les parties bâbord et tribord et, dans le cas particulier des entrées d'air de turboréacteurs, la formation de blocs de glace susceptibles de pénétrer dans le turboréacteur et de causer des dégâts considérables, ou encore d'impacter la cellule de l'aéronef comme le mat réacteur, la voilure, les empennages ou le fuselage. En particulier, selon les conditions de température et d'humidité, de la glace peut se former sur la nacelle au niveau de la surface externe de la lèvre d'entrée d'air. La présence de glace ou de givre modifie les propriétés aérodynamiques de l'entrée d'air et perturbe l'acheminement de l'air vers la soufflante. Des morceaux de glace peuvent éventuellement se détacher de la lèvre d'entrée d'air et entrer en collision avec des composants du turboréacteur tels que les aubes de la soufflante, ou de la cellule de l'aéronef.

Les performances du turboréacteur étant liées à la quantité et à la qualité de la captation d'air réalisée par l'entrée d'air, il convient de dégivrer la lèvre d'entrée d'air lorsque de la glace ou du givre se forme sur celle-ci. Pour cela, de nombreux systèmes de dégivrage ou d'antigivrage ont été mis au point dans le domaine aéronautique, étant ici rappelé que le dégivrage consiste à évacuer la glace déjà formée, et que l'antigivrage consiste à prévenir toute formation de glace.

L'antigivrage est nécessaire en particulier dans le cas de turboréacteurs comprenant des parties en matériaux composites, telles que les aubes de soufflante : dans un tel cas, il faut supprimer tout risque d'arrivée de glace dans le moteur, les matériaux composites risquant des endommagements importants en cas de choc.

Dans la suite de la présente description, le terme « dégivrage » est utilisé indifféremment pour désigner un dégivrage ou un antigivrage.

Parmi les systèmes de dégivrage de la technique antérieure, on connaît des systèmes électriques. On alimente un réseau de résistances électriques au moyen d'un courant engendré par des organes d'alimentation électrique de l'aéronef. Ces résistances sont généralement disposées dans la peau du bord d'attaque ou de la lèvre d'entrée d'air. Ces systèmes électriques sont très exposés aux impacts de toutes natures et leur réparation devient, en cas d'endommagement perforant, problématique, voire impossible.

Il est également connu de la technique, notamment du brevet EP 1 495 963, d'appliquer une résistance chauffante sur une paroi extérieure delta lèvre d'entrée d'air. La résistance chauffante est soumise à de nombreux chocs pouvant entraîner une usure prématurée de celle-ci, voire son dysfonctionnement.

Un tel dysfonctionnement de la résistance chauffante peut provoquer une accumulation de glace ou de givre sur l'entrée d'air et donc une diminution des performances du turboréacteur.

D'autre part, les systèmes de dégivrage de l'état de la technique peuvent être composés de conducteurs arrangés en rubans alimentés par des alimentations différentes pour limiter les problèmes de panne dues à une coupure d'alimentation. Cependant, bien qu'une partie du dispositif reste alimenté en cas de panne ponctuelle d'une alimentation, il y a apparition de blocs de glace sur toute la longueur des rubans non alimentés.

De tels blocs de glace sont de taille importante et peuvent provoquer des dégâts important lors de leur arrachement de la paroi.

Ceci, d'autant plus que les risques d'arrachements sont fréquents du fait qu'au fur et à mesure que la glace se dépose, la zone devient isolée thermiquement du flux d'air extérieur par l'agrégat de glace et la température de la paroi de la lèvre augmente par l'effet de conduction de la chaleur issue de la zone encore alimentée adjacente. On comprend donc tout l'intérêt de minimiser la taille de ces agrégats.

Le document DE4221454, qui montre toutes les caractéristiques du préambule de la revendication 1, est considéré l'état de la technique le plus proche.

La présente invention a pour but de pallier tout ou partie des inconvénients précédemment évoqués.

On atteint ce but de l'invention avec, selon un premier aspect, un dispositif de dégivrage notamment pour nacelle d'aéronef comprenant au moins deux rubans électriques réalisés chacun à partir d'au moins un conducteur principal orienté sensiblement suivant la longueur dudit ruban, caractérisé en ce que lesdits rubans présentent des éléments rectilignes et des éléments coudés, en ce que lesdits rubans présentent des spirales, c'est à dire des clés grecques, formés par l'association de plusieurs desdits éléments coudés, et en ce que les rubans contigus sont imbriqués au moins deux à deux.

Un tel agencement permet de limiter la surface des zones non chauffées entre deux rubans alimentés en électricités lorsqu'un ruban ne fonctionne pas suite à une panne d'alimentation électrique ou d'un dysfonctionnement d'un ruban suite à un impact.

Dans une solution à ruban adjacents non imbriqués, les agrégats de glace formés en cas de panne d'alimentation d'un ruban, ou de l'endommagement trop important d'un ruban pour qu'il puisse fonctionner, sont répartis en longueur sur une distance importante compte tenu de l'uniformité des températures suivant la direction longitudinale des rubans. Cette uniformité de température occasionne une éjection simultanée de tout l'agrégat pouvant entraîner des dommages important dans la structure de l'appareil en vol.

Dans le cas de la présente invention décrit ci-dessus, en cas de panne ou de dysfonctionnement d'un ruban, la configuration rubans imbriqués permet de faire varier la distance entre les zones dégivrée et les zones non dégivré de telle sorte que la fonte de la glace n'est jamais uniforme le long du ruban. Par suite, le dispositif de la présente invention décrit ci-dessus permet de réduire fortement la taille des agrégats.

Le terme « conducteur » au sens de la présente invention signifie des fils électriques comprenant un matériau conducteur de l'électricité, avec une résistivité choisie en fonction de la taille du dispositif de dégivrage, de sa compacité, et de la puissance à dissiper pour réaliser la fonction de dégivrage.

Suivant d'autres caractéristiques optionnelles du dispositif de dégivrage selon la présente invention :
- lesdits éléments coudés sont coudés selon un angle de sensiblement 90° ;
- au moins un ruban comprend au moins deux conducteurs principaux : ainsi il est possible de relier au moins deux conducteurs principaux entre eux dans un ruban ;
- de préférence, ledit ruban est muni de conducteurs transverses positionnés périodiquement, lesquels conducteurs transverses sont aptes à redistribuer le courant électrique entre au moins deux conducteurs principaux : l'utilisation de conducteurs transverses est particulièrement avantageuse car elle permet de prévenir une panne ponctuelle dans le dispositif. Ainsi, lorsqu'un groupe de conducteurs principaux, reliés périodiquement entre eux par des conducteurs transverses, est endommagé de telle façon qu'il ne peut plus conduire le courant en aval de la panne, les deux conducteurs transverses qui encadrent la zone d'endommagement prennent le relais et assurent la continuité, de sorte que l'ensemble du ruban reste entièrement alimenté en aval de la panne; une telle association série-parallèle, ménagée entre différents conducteurs, garantit la continuité électrique dans le ruban malgré la rupture d'un ou plusieurs conducteurs du ruban ;
- de manière d'avantage préférée, les conducteurs transverses sont aptes à redistribuer les courants électriques entre tous les conducteurs principaux d'un même ruban : une configuration économique et simple à réaliser consiste à relier les conducteurs transverses à tous les conducteurs principaux pour former un réseau de conducteurs associés en série-parallèle ;
- de manière d'avantage préférée, les conducteurs transverses des spirales sont aptes à redistribuer les courants électriques entre tous les conducteurs principaux d'une même spirales : une telle configuration permet d'assurer la continuité électrique dans une spirale au plus près d'une zone endommagée par un impact occasionnant la rupture d'un ou plusieurs fils dans la spirale ;
- de manière encore d'avantage préférée, les conducteurs transverses sont positionnés selon au moins l'une des orientations sélectionnée parmi une orientation normale à la direction des conducteurs principaux et une orientation oblique à la direction des conducteurs principaux : une telle configuration permet d'avoir des conducteurs principaux avec une homogénéité de résistance sur toutes leurs sections, ce qui est d'avantage expliqué dans la suite de la description ;
- lesdits rubans sont supportés par une surface présentant des motifs de perçage acoustique, et en ce que lesdits conducteurs contournent lesdits motifs de perçage ;
- lesdits rubans imbriqués sont alimentés par des alimentations différentes : le terme « alimentations différentes » (ou « alimentation différente ») au sens de la présente demande signifie plusieurs sources d'alimentations (ou une autre source d'alimentation), mais il peut également définir plusieurs phases dans le cas d'une alimentation à plusieurs phases, tel que une alimentation triphasée ; en cas de dysfonctionnement d'une ou plusieurs des sources d'alimentations alimentant un ensemble de rubans branchés en parallèle et imbriqués, la taille des agrégats de glace est limitée étant donné que les zones non chauffées ne sont pas homogènes autour des rubans qui fonctionnent encore suite à la panne ;
- de préférence, les rubans sont au moins imbriqués par groupe de trois et les deux rubans extrêmes desdits au moins trois rubans contigus imbriqués sont réalisés à partir d'au moins deux conducteurs principaux, et lesdits rubans extrêmes sont positionnés de sorte qu'au moins la moitié de leurs conducteurs principaux soient en dehors d'une zone susceptible de subir des impacts, en particulier de gréle ;
- de manière plus préférée, il est alimenté par une alimentation triphasée de sorte que trois rubans contigus sont imbriqués et alimentés chacun par une des trois phases : un tel agencement est simple à réaliser et permet de n'utiliser qu'une seule alimentation, en l'espèce une alimentation triphasée, procurant un effet équivalent à celui consistant à brancher les rubans contigus sur trois alimentation différentes ; il en résulte un gain de place et une diminution du poids ;
- de manière encore plus préférée, lesdits trois rubans sont positionnés en configuration étoile ;

Selon un deuxième aspect, l'invention a pour objet une lèvre d'entrée d'air d'aéronef incorporant un dispositif tel que décrit précédemment.

D'autres caractéristiques et avantages de l'invention apparaîtront à la lumière de la description qui va suivre en référence aux figures annexées, dans lesquelles :
- la figure 1 représente une vue de détail d'un système de dégivrages à deux alimentations de l'état de la technique ;
- la figure 2 représente une vue de détail, d'un système de dégivrages à deux alimentations de l'état de la technique avec un défaut d'alimentation d'une des deux alimentations ;
- la figure 3 représente une vue de détail d'un dispositif à deux alimentations selon l'invention ;
- la figure 4 représente une vue de détail d'un dispositif à deux alimentations selon l'invention, avec une des séries de rubans présentant un défaut d'alimentation ;
- la figure 5 représente une vue de détail d'un dispositif alimenté par un réseau électrique triphasé selon l'invention ;
- la figure 6 représente une vue schématique de l'arrangement des rubans alimentés par un système triphasé ;
- la figure 7 représente une vue de détail d'un ruban d'un dispositif de l'invention avec des conducteurs transverses 23 ;
- la figure 8 représente une vue de détail d'un élément coudé d'un dispositif selon l'invention supporté par une structure contenant des motifs de perçage ;
- la figure 9 représente une vue de détail d'un ruban d'un dispositif selon l'invention supporté par une structure contenant des motifs de perçage.

Le terme « élément rectiligne » au sens de l'invention, désigne une bande linéaire d'un ruban qui comprend l'ensemble des conducteurs principaux.

Le terme « élément coudé » au sens de l'invention signifie une bande avec un coude comprenant une partie des conducteurs principaux d'un ruban. L'association de plusieurs éléments coudés permet de former des motifs en spirales.

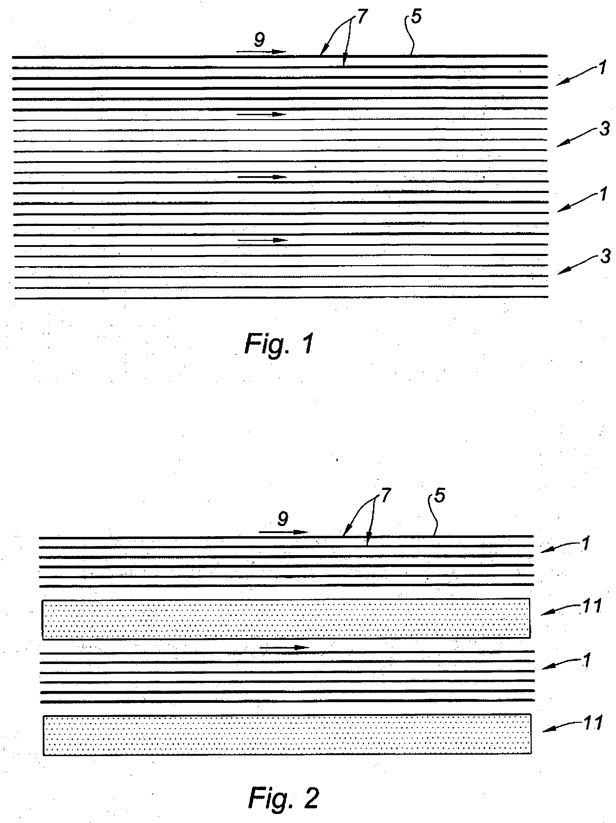

La figure 1 représente un système de dégivrage à deux alimentations de l'état de la technique incorporant une première série de rubans 1, respectivement alimentée par une première alimentation non représentée, et une deuxième série de rubans 3, respectivement alimentée par une deuxième alimentation. Chaque ruban 5 est formé d'une série de conducteurs principaux 7 en parallèles traversés par un courant 9 matérialisé par des flèches, et réparties sur la surface à dégivrer.

La figure 2 représente le même système de dégivrage de l'état de la technique, mais dans lequel une des alimentations a été endommagée ou ne fonctionne plus suite à une panne. Des agrégats de glace 11 se forment sur les surfaces non dégivrées, ils occupent toute la longueur des rubans 5 non alimentés. L'uniformité des températures le long des rubans 5 provoque l'arrachement des agrégats de glaces 11 simultanément sur toute la longueur du ruban 5, il y a donc détachement de blocs de glaces de gros volumes pouvant causer des dégâts importants.

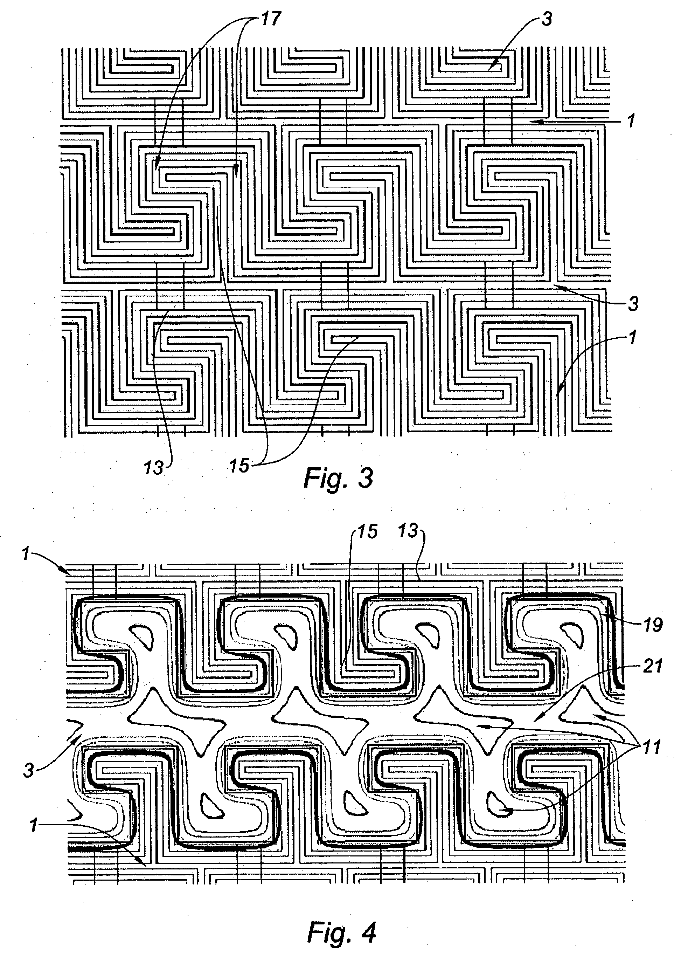

La figure 3 représente un mode de réalisation d'un dispositif selon l'invention, comprenant une première et une deuxième série de rubans 1 et 3, chaque série étant alimentée par une alimentation différente. Les séries 1 et 3 contiennent des éléments rectilignes 13 et des spirales 15. Les spirales 15 sont formées, par exemple, par l'association d'éléments coudés 17 à 90°. Le niveau d'imbrication des rubans 5 n'est pas limité. Il peut être important de manière à augmenter la longueur des rubans 5 par unité de surface, ceci pour augmenter leur résistance et permettre ainsi l'emploi de matériaux moins résistifs, ou d'augmenter la tension d'alimentation du réseau et réduire ainsi la traille des câbles nécessaire à la connexion entre la lèvre et les alimentations.

- La figure 4 représente le même mode de réalisation selon l'invention pour lequel l'alimentation de la série de rubans 3 ne fonctionne plus suite à une panne. On peut aisément concevoir qu'un impact relativement violent peut produire localement le même effet, et interrompre la circulation du courant 9 dans un ruban 1 de la série 3. La morphologie des agrégats de glace 11 illustrés sur la figure 4, correspond à celle de petits amas de glace du fait de la conformation des isothermes 19, et étant donné que la zone non chauffée 21 suite au défaut d'alimentation n'est pas linéaire et est très localisée.

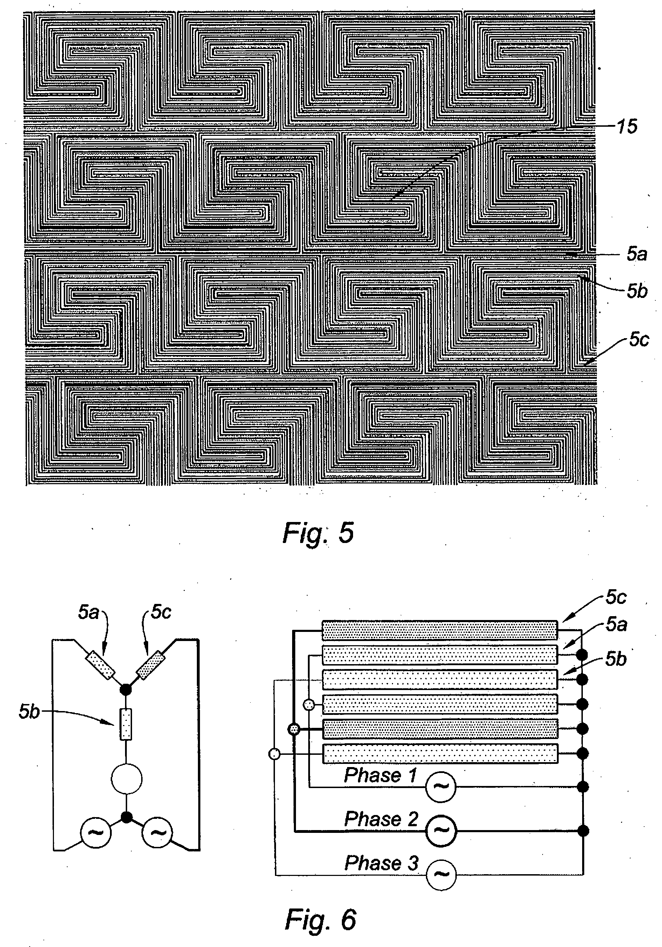

Dans le cas d'un système de dégivrage connecté à un réseau triphasé, on réalise un dispositif à trois alimentations (une par phase) dans lequel chaque phase alimente une série de rubans 5. La figure 5 représente un mode de réalisation, particulièrement avantageux lors de l'utilisation d'une alimentation triphasée, où trois rubans 5a, 5b, 5c alimentés chacun par une des trois phases sont imbriqués dans une même spirale 15. Dans le cas de l'alimentation triphasée, où les alimentations ne sont pas en phase, les rubans 5 peuvent être préférentiellement positionnés en configuration étoile (voir figure 6).

Il peut être avantageux de positionner de tels systèmes de dégivrage à trois rubans imbriqués 5a, 5b, 5c, de sorte, qu'au moins une partie, de préférence la moitié, des conducteurs principaux 7 des deux rubans extrêmes 5a et 5c soient en dehors de la zone susceptible de subir des impacts, tels que des impacts de grêlons. Les zones impactées par la grêle sont situés notamment dans la partie la plus en amont de la lèvre d'entrée d'air d'une nacelle d'aéronef. Ainsi en cas d'impacts multiples provoquant l'endommagement de l'ensemble des conducteurs principaux 7 parcourant les zones impactées, les deux rubans extrêmes 5a et 5c n'étant qu'en parties endommagés assurent la fonction de dégivrage sur la zone impactée. Un tel agencement sur, et autour, de la zone susceptible d'être impactée peut être généralisé à un ensemble de plus de trois rubans 5 imbriqués dont les deux rubans extrêmes garantissent une conformation des isothermes 19 qui minimise la taille des agrégats de glace. Bien entendu, un tel agencement fonctionne de manière optimisée lorsque les rubans imbriqués sont munis de conducteurs transverses 23, tel que cela est d'avantage expliqué dans la suite de la description.

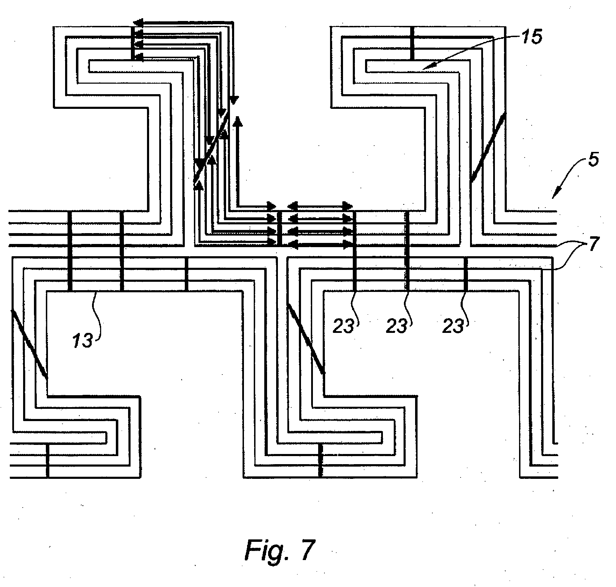

On peut prévoir d'utiliser un dispositif à rubans 5 imbriqués tel que vu précédemment, avec des rubans 5 qui comprennent en outre des conducteurs transverses 23 positionnés de manière à traverser une série de conducteurs principaux 7. De tels rubans 5 comprennent une série de conducteurs principaux 7 reliés périodiquement entre eux par des conducteurs transverses 23, afin de réaliser une association série-parallèle et de permettre la continuité électrique dans le ruban 5 malgré la rupture d'un ou plusieurs conducteurs du ruban 5. Dans le cas des dispositifs à rubans 5 imbriqués à plusieurs alimentations, tels que les dispositifs selon l'invention décrit ci-dessus, les conducteurs transverses 23 sont de préférence positionnés : pour les éléments rectiligne 13, de sorte qu'ils coupent orthogonalement tous les conducteurs principaux 7 d'un même ruban 5 ; pour les spirales 15, de sorte qu'ils coupent orthogonalement et en oblique tous les conducteurs principaux 7 d'une même spirale (voir figure 7). Un tel agencement permet de garantir qu'entre deux conducteurs transverses 23, la longueur (matérialisée sur la figure 7 par des flèches doubles) des conducteurs principaux 7 soit la même, et donc leur résistance. Ceci pour que la différence de potentielle soit nulle afin de ne pas faire passer de courant 9 dans les conducteurs transverses 23 en fonctionnement normal, mais uniquement en cas d'endommagement d'un ou plusieurs conducteurs principaux 7.

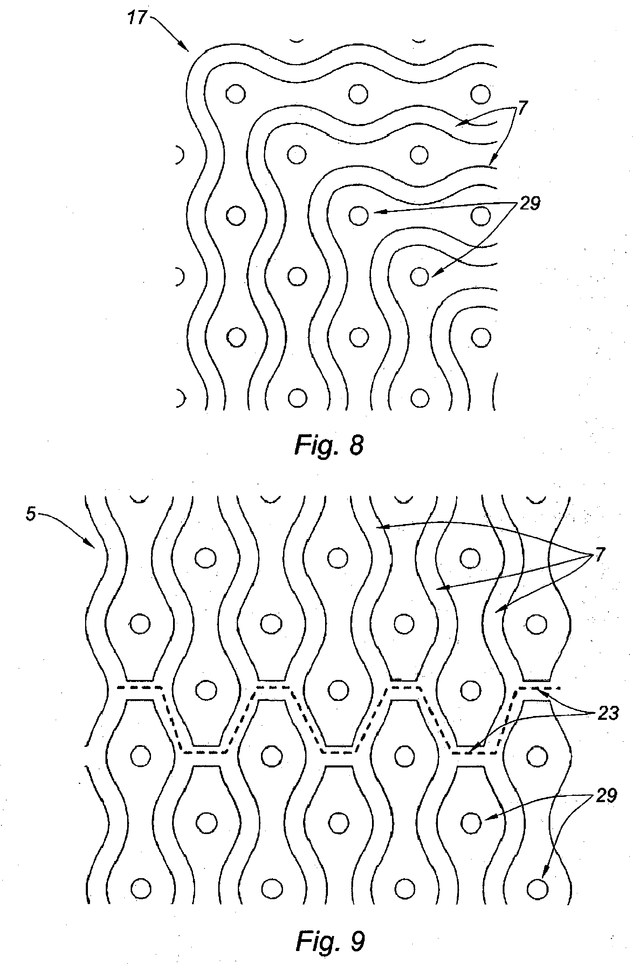

La figure 8 illustre la configuration des conducteurs dans un ruban 5 d'un dispositif selon l'invention, où des conducteurs principaux 7 des éléments coudés 17 du ruban 5 contournent des motifs de perçage acoustique 29 dans la structure de la surface à dégivrer. La figure 9 illustre la configuration des conducteurs dans un ruban 5 d'un dispositif selon l'invention, où les conducteurs principaux 7 et transverses 23 contournent les motifs de perçage acoustique 29 dans la structure de la surface à dégivrer.

Bien entendu, la présente invention n'est nullement limitée aux modes de réalisation décrits et représentés, fournis à titre de simples exemples.

## Revendications

1. Dispositif (1) de dégivrage notamment pour nacelle d'aéronef comprenant au moins deux rubans (5) électriques réalisés chacun à partir d'au moins un conducteur principal (7) orienté sensiblement suivant la longueur dudit ruban (5), lesdits rubans (5) présentant des éléments rectilignes (13) et des éléments coudés (17), en ce que lesdits rubans (5) présentant des spirales (15) formées par l'association de plusieurs desdits éléments coudés (17), en ce que les rubans (5) contigus étant imbriqués au moins deux à deux, et en ce que les rubans (5) imbriqués sont alimentés par des alimentations différentes, **caractérisé en ce que** les spirales ont forme de clé grecque.

2. Dispositif (1) selon la revendication 1, **caractérisé en ce que** lesdits éléments coudés (17) sont coudés selon un angle de sensiblement 90°.

3. Dispositif (1) selon l'une des revendications 1 ou 2, **caractérisé en ce qu'**au moins un ruban (5) comprend au moins deux conducteurs principaux (7).

4. Dispositif (1) selon la revendication 3, **caractérisé en ce que** ledit ruban (5) est muni de conducteurs transverses (23) positionnés périodiquement, lesquels conducteurs transverses (23) sont aptes à redistribuer le courant (9) électrique entre au moins deux conducteurs principaux (7).

5. Dispositif (1) selon la revendication 4, **caractérisé en ce que** les conducteurs transverses (23) sont aptes à redistribuer les courants (9) électriques entre tous les conducteurs principaux (7) d'un même ruban (5).

6. Dispositif (1) selon l'une quelconque des revendications 4 ou 5, **caractérisé en ce que** les conducteurs transverses (23) des spirales (15) sont aptes à redistribuer les courant (9) électriques entre tous les conducteurs principaux (7) d'une même spirale (15).

7. Dispositif (1) selon l'une quelconque des revendications 4 à 6, **caractérisé en ce que** les conducteurs transverses (23) sont positionnés selon au moins l'une des orientations sélectionnée parmi une orientation normale à la direction des conducteurs principaux (7) et une orientation oblique à la direction des conducteurs principaux (7).

8. Dispositif (1) selon l'une quelconque des revendications précédentes, **caractérisé en ce que** lesdits rubans (5) sont supportés par une surface comprenant des motifs de perçage acoustique (29), et **en ce que** lesdits conducteurs (7, 23) contournent lesdits motifs de perçage (29).

9. Dispositif (1) selon l'une quelconque des revendications précédentes, **caractérisé en ce que** les rubans (5) sont au moins imbriqués par groupe de trois et les deux rubans extrêmes (5a, 5c) desdits au moins trois rubans (5) contigus imbriqués sont réalisés à partir d'au moins deux conducteurs principaux (7), et **en ce que** lesdits rubans extrêmes (5a, 5c) sont positionnés de sorte qu'au moins la moitié de leurs conducteurs principaux (7) soient en dehors d'une zone susceptible de subir des impacts, en particulier de grêle.

10. Dispositif (1) selon la revendication 9, **caractérisé en ce qu'**il est alimenté par une alimentation triphasée de sorte que trois rubans (5) contigus sont imbriqués et alimentés chacun par une des trois phases.

11. Dispositif (1) selon l'une des revendications 9 ou 10, caractérisé en ce lesdits trois rubans (5) sont positionnés en configuration étoile.

12. Lèvre d'entrée d'air d'aéronef incorporant un dispositif (1) selon l'une des revendications précédentes.

## Patentansprüche

1. Enteisungsvorrichtung (1), insbesondere für eine Flugzeuggondel, welche mindestens zwei elektrische Bänder (5) umfasst, die jeweils aus mindestens einem, im Wesentlichen in Längsrichtung des besagten Bandes (5) ausgerichteten Hauptleiter (7) ausgeführt sind, wobei die besagten Bänder (5) geradlinige Elemente (13) und abgewinkelte Elemente (17) aufweisen, wobei die besagten Bänder (5) Spiralen (15) aufweisen, die durch die Verbindung von mehreren der besagten abgewinkelten Elemente (17) gebildet werden, wobei die benachbarten Bänder (5) mindestens zweierweise verschachtelt sind und wobei die verschachtelten Bänder (5) über verschiedene Speisungen gespeist werden, **dadurch gekennzeichnet, dass** die Spiralen die Form griechischer Mäander aufweisen.

2. Vorrichtung (1) nach Anspruch 1, **dadurch gekennzeichnet, dass** die besagten abgewinkelten Elemente (17) in einem Winkel von im Wesentlichen 90° abgewinkelt sind.

3. Vorrichtung (1) nach einem der Ansprüche 1 oder 2, **dadurch gekennzeichnet, dass** mindestens ein Band (5) mindestens zwei Hauptleiter (7) umfasst.

4. Vorrichtung (1) nach Anspruch 3, **dadurch gekennzeichnet, dass** das besagte Band (5) mit periodisch angeordneten Querleitern (23) ausgestattet ist, wobei diese Querleiter (23) imstande sind, den elektrischen Strom (9) zwischen mindestens zwei Hauptleitern (7) umzuverteilen.

5. Vorrichtung (1) nach Anspruch 4, **dadurch gekennzeichnet, dass** die Querleiter (23) imstande sind, die elektrischen Ströme (9) zwischen allen Hauptleitern (7) eines selben Bandes (5) umzuverteilen.

6. Vorrichtung (1) nach einem der Ansprüche 4 oder 5, **dadurch gekennzeichnet, dass** die Querleiter (23) der Spiralen (15) imstande sind, die elektrischen Ströme (9) zwischen allen Hauptleitern (7) einer selben Spirale (15) umzuverteilen.

7. Vorrichtung (1) nach einem der Ansprüche 4 bis 6, **dadurch gekennzeichnet, dass** die Querleiter (23) in mindestens eine der Ausrichtungen angeordnet sind, welche ausgewählt ist aus einer Ausrichtung senkrecht zur Richtung der Hauptleiter (7) und einer Ausrichtung schräg zur Richtung der Hauptleiter (7).

8. Vorrichtung (1) nach einem der vorstehenden Ansprüche, **dadurch gekennzeichnet, dass** die besagten Bänder (5) von einer Fläche getragen werden, welche akustische Bohrmuster (29) umfasst, und dadurch, dass die besagten Leiter (7, 23) die besagten Bohrmuster (29) umlaufen.

9. Vorrichtung (1) nach einem der vorstehenden Ansprüche, **dadurch gekennzeichnet, dass** die Bänder (5) in mindestens Dreiergruppen verschachtelt sind und die zwei äußeren Bänder (5a, 5c) der besagten mindestens drei benachbarten, verschachtelten Bänder (5) aus mindestens zwei Hauptleitern (7) ausgeführt sind, und dadurch, dass die besagten äußeren Bänder (5a, 5c) derart angeordnet sind, dass mindestens die Hälfte ihrer Hauptleiter (7) außerhalb einer Zone liegen, welche dafür empfindlich ist, Einschläge, insbesondere von Hagel, zu erleiden.

10. Vorrichtung (1) nach Anspruch 9, **dadurch gekennzeichnet, dass** sie derart über eine dreiphasige Speisung gespeist wird, dass drei benachbarte Bänder (5) verschachtelt und jeweils von einer der drei Phasen gespeist sind.

11. Vorrichtung (1) nach einem der Ansprüche 9 oder 10, **dadurch gekennzeichnet, dass** die besagten drei Bänder (5) in Sternkonfiguration angeordnet sind.

12. Lufteingangslippe eines Flugzeugs mit einer Vorrichtung (1) nach einem der vorstehenden Ansprüche.

## Claims

1. A deicing device (1) in particular for an aircraft nacelle comprising at least two electrical ribbons (5) each made from at least one main conductor (7) oriented substantially along the length of said ribbon (5), said ribbons (5) presenting rectilinear elements (13) and bent elements (17), said ribbons (5) presenting spirals (15) formed by the association of several of said bent elements (17), the contiguous ribbons (5) being nested at least in pairs, and the nested ribbons (5) are powered by different power supplies, **characterized in that** these spirals are in the form of a greek meander.

2. The device (1) according to claim 1, **characterized in that** said bent elements (17) are bent about an angle substantially equal to 90°.

3. The device (1) according to any of claims 1 or 2, **characterized in that** at least one ribbon (5) comprises at least two main conductors (7).

4. The device (1) according to claim 3, **characterized in that** said ribbon (5) is provided with periodically positioned transverse conductors (23), which transverse conductors (23) are capable of redistributing the electric current (9) between at least two main conductors (7).

5. The device (1) according to claim 4, **characterized in that** the transverse conductors (23) are capable of redistributing the electric currents (9) between all the main conductors (7) of the same ribbon (5).

6. The device (1) according to any one of claims 4 or 5, **characterized in that** the transverse conductors (23) of the spirals (15) are capable of redistributing the electric currents (9) between all the main conductors (7) of the same spiral (15).

7. The device (1) according to any one of claims 4 to 6, **characterized in that** the transverse conductors (23) are positioned according to at least one of the orientation selected among an orientation normal to the direction of the main conductors (7) and an orientation oblique to the direction of the main conductors (7).

8. The device (1) according to any one of the preceding claims, **characterized in that** said ribbons (5) are supported by a surface comprising acoustic drilling patterns (29), and **in that** said conductors (7, 23) circumvent said drilling patterns (29).

9. The device (1) according to any one of the preceding claims, **characterized in that** the ribbons (5) are at least nested in groups of three and the two extreme ribbons (5a, 5c) of said at least three nested contiguous ribbons (5) are made from at least two main conductors (7), and **in that** said extreme ribbons (5a, 5c) are positioned so that at least half of their main conductors (7) are outside of an area likely to be subjected to impacts, in particular hail impacts.

10. The device (1) according to claim 9, **characterized in that** it is powered by a three-phase power supply so that three contiguous ribbons (5) are nested and each is powered by one of the three phases.

11. The device (1) according to any of claims 9 or 10, **characterized in that** said three ribbons (5) are positioned in star configuration.

12. An air intake lip of an aircraft incorporating a device (1) according to any of the preceding claims.
